Europäisches Patentamt

European Patent Office

Office européen des brevets

(11) Veröffentlichungsnummer: **0 216 006**
**A2**

## (12) EUROPÄISCHE PATENTANMELDUNG

(21) Anmeldenummer: 86106084.6

(22) Anmeldetag: 02.05.86

(51) Int. Cl.⁴: **B29C 47/10** , D01F 1/06

(30) Priorität: 27.09.85 DE 3534403

(43) Veröffentlichungstag der Anmeldung:
01.04.87 Patentblatt 87/14

(84) Benannte Vertragsstaaten:
BE CH DE FR GB IT LI

(71) Anmelder: Neumünstersche Maschinen- und
Apparatebau Gesellschaft mbH. (NEUMAG)
Postfach 2240 Christianstrasse 160-164
D-2350 Neumünster 1(DE)

(72) Erfinder: Beck, Arnold
Würben 2b
D-2350 Neumünster 8(DE)

(74) Vertreter: Planker, Karl-Josef, Dipl.-Phys.
c/o Deutsche Babcock Anlagen AG
Parkstrasse 29 Postfach 4 + 6
D-4150 Krefeld 11(DE)

(54) Verfahren und Vorrichtung zum Zumischen eines feinverteilten Farbstoffs zu einem Kunststoffgranulat.

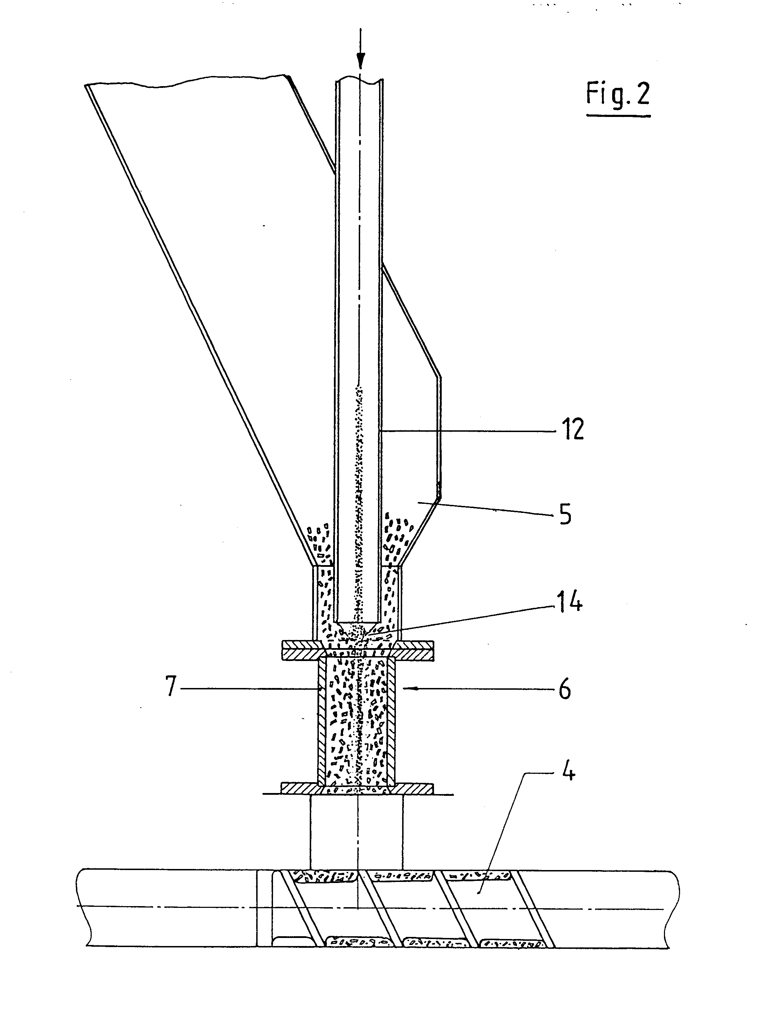

(57) Die Erfindung befaßt sich mit dem kontinuierlichen Zumischen eines Farbstoffs zu einem Kunststoffgranulat, das unmittelbar anschließend einem Spinnextruder zugeführt wird. Das Kunststoffgranulat bildet in einem Füllschacht (3) eine dichte Schüttung. In den Füllschacht (3) mündet von oben ein senkrechter Einfallschacht (12). Unter der Einmündung bildet das Kunststoffgranulat eine Böschung (14). Auf diese Böschung rieselt das aus einer Dosierstation (9) kommende Farbstoffgranulat. Das kontinuierlich nachfließende Kunststoffgranulat, das die Böschung (14) fortwährend erneuert, zieht den Farbstoff gleichmäßig in die im unteren Teil (6) des Füllschachtes (3) befindliche Schüttgutsäule hinein (Figur 2).

Fig. 2

## Verfahren und Vorrichtung zum Zumischen eines feinverteilten Farbstoffs zu einem Kunststoffgranulat.

Die Erfindung befaßt sich mit einem Verfahren zum Zumischen eines feinverteilen Farbstoffs zu einem Kunststoffgranulat gemäß dem Oberbegriff des Patentanspruchs 1 sowie mit einer zur Durchführung des Verfahrens geeigneten Vorrichtung gemäß dem Oberbegriff des Anspruchs 3.

Durch die DE-OS 16 29 721, von der die Erfindung ausgeht, sind Vorrichtungen zum Einfärben eines Kunststoffgranulats bei Extruderschneckenmaschinen bekannt geworden. Bei diesen Vorrichtungen sitzt auf dem hinteren Ende des Extruders ein Fülltrichter mit senkrechtem Füllschacht für das Kunststoffgranulat. Seitlich in den Füllschacht mündet ein waagerecht angeordnetes Zuführrohr mit Vorschub bzw. Förderorganen für den Farbstoff. Der Farbstoff hat bei einem Ausführungsbeispiel die Form einer Mine, die durch Federkraft gegen eine Reibscheibe gedrückt wird; die abgetrennten Partikel gelangen über einen schräg abwärts gerichteten kurzen Kanal in den Füllschacht. Bei anderen Ausführungsbeispielen wird der Farbstoff durch eine in dem Zuführrohr angeordnete Schnecke einem Behälter entnommen bzw. von einer Mine abgeschabt und ebenfalls über einen schräg abwärts gerichteten Kanal in den Füllschacht hineingefördert. Bei diesem Stand der Technik ist nur eine grobe Dosierung möglich, die keinesfalls den Anforderungen genügt, die bei der Herstellung qualitativ hochwertiger synthetischer Fäden gestellt werden.

Gegenstand der DE-OS 21 62 308 ist ein Verfahren zum Herstellen von mehrfarbigen Fäden mit unregelmäßig wechselnden Farben. Hierbei werden verschiedene Farbstoffe in Pelletform mit vorgegebenen Zeitabständen in statistischer Reihenfolge durch ein Beschickungsrohr, das von einer sogenannten Zuführtasche für das Kunststoffgranulat getrennt ist, dem stromaufwärtigen Ende der Extruderschnecke zugeführt, so daß sie in einen ungefüllten Schneckengang fallen. Durch die rotierende Schnecke werden die einzelnen Pellets in die Zuführtasche befördert, unter die Kunststoffgranalien gemischt und anschließend in die Schmelze einverleibt. Diese Art der Farbstoffzufuhr mag für den speziellen Anwendungsfall durchaus geeignet sein. Beim Spinnen einheitlich gefärbter Fäden ist aber die geforderte Gleichmäßigkeit nicht zu erreichen, insbesondere wenn der Farbstoff z.B. in Form eines Granulats oder Pulvers vorliegt, das in der Schnecke oder in dem Beschickungsrohr zur Bildung von Klumpen, Stopfen oder Brücken neigt. Beim Farbwechsel ist die Reinigung des hinteren Schneckenendes äußerst schwierig.

Da mit den bisher erwähnten vorbekannten Vorrichtungen, die dem Erfindungsgegenstand am nächsten kommen, eine gleichmäßige exakte Zumischung des Farbstoffs unmöglich ist, ist bisher üblicherweise in Spinnanlagen dem Extruder ein zusätzlicher Mischer vorgeschaltet, dem das Kunststoffgranulat und der Farbstoff dosiert zugeführt werden (z.B. DE-OS 24 16 248, DE-OS 27 37 868, DE-OS 31 46 667).

Trotz des großen Aufwandes können die Ergebnisse nicht immer befriedigen. Denn im Mischer können z.B. durch unterschiedliche Korngrößen, Dichten und elektrostatische Aufladungen der einzelnen Komponenten Entmischungsvorgänge stattfinden, die zu einer ungleichmäßigen Einfärbung der Schmelze führen.

Der Erfindung liegt die Aufgabe zugrunde, ein Verfahren der im Oberbegriff des Patentanspruchs 1 angegebenen Gattung zu verbessern, so daß mit geringem Aufwand eine gleichmäßige Farbstoffdosierung erreicht wird, ohne daß Entmischung zu befürchten ist. Eine weitere Aufgabe besteht darin, eine zur Durchführung des erfindungsgemäßen Verfahrens geeignete Vorrichtung zu schaffen, die einfach im Aufbau und leicht zu reinigen ist.

Die erstgenannte Aufgabe wird dadurch gelöst, daß der dosierte Farbstoff auf eine Böschung des Kunststoffgranulats rieselt. Nachfließendes Kunststoffgranulat, das die Böschung fortwährend erneuert, nimmt den Farbstoff unmittelbar mit, ohne daß es zu einer Stauung oder Entmischung kommen kann.

Wenn die Böschung gemäß Anspruch 2 trichterförmig ausgebildet ist, wird der herabrieselnde Farbstoff geradezu in den Kern der Böschung hineingezogen.

Die zweite Aufgabe wird erfindungsgemäß dadurch gelöst, daß in den Füllschacht für das Kunststoffgranulat ein senkrechter Einfallschacht für den Farbstoff einmündet. Bei dieser Anordnung bildet das Kunststoffgranulat unter der Einmündung eine freie Böschung.

Um das freie Rieseln des Farbstoffs nicht zu behindern und um ein Aufstauen des Farbstoff über der Böschung zu vermeiden, ist es wichtig, daß das Querschnittsverhältnis zwischen Füllschacht und Einfallschacht gemäß Anspruch 4 höchstens etwa 6:1 beträgt. Je größer das Verhältnis zwischen zudosierter Farbstoffmenge und Kunststoffgranulatmenge, desto kleiner muß das Querschnittsverhältnis sein. Es ist daher vorzugsweise zwischen 4:1 und 1:1.

Durch einen am oberen Ende des Einfallschachts angebrachten Trichter gemäß Anspruch 5 wird erreicht, daß eine besondere konstruktive Anpassung an den Materialauslauf der Dosiervorrichtung nicht erforderlich ist; es können auch problemlos mehrere Dosiervorrichtungen vorgesehen werden.

Bei der in Anspruch 6 angegebenen bevorzugten Ausführungsform der Erfindung ist der Einfallschacht mittig in dem Füllschacht angeordnet. Dabei ergibt sich unter dem unteren Ende des Einfüllschachts eine trichterförmige Böschung. Dieses Ausführungsbeispiel hat den Vorteil, daß der Farbstoff mit den Wänden des Füllschachtes überhaupt nicht in Berührung kommt. Daher können sich an dieser Stelle keine Farbablagerungen bilden, und beim Farbwechsel wird die Reinigung des Systems sehr erleichtert.

Durch das Merkmal des Anspruchs 7 wird die Reinigung weiter erleichtert.

Die Zeichnung dient zur Erläuterung der Erfindung anhand von vereinfacht dargestellten Ausführungsbeispielen der erfindungsgemäßen Vorrichtung.

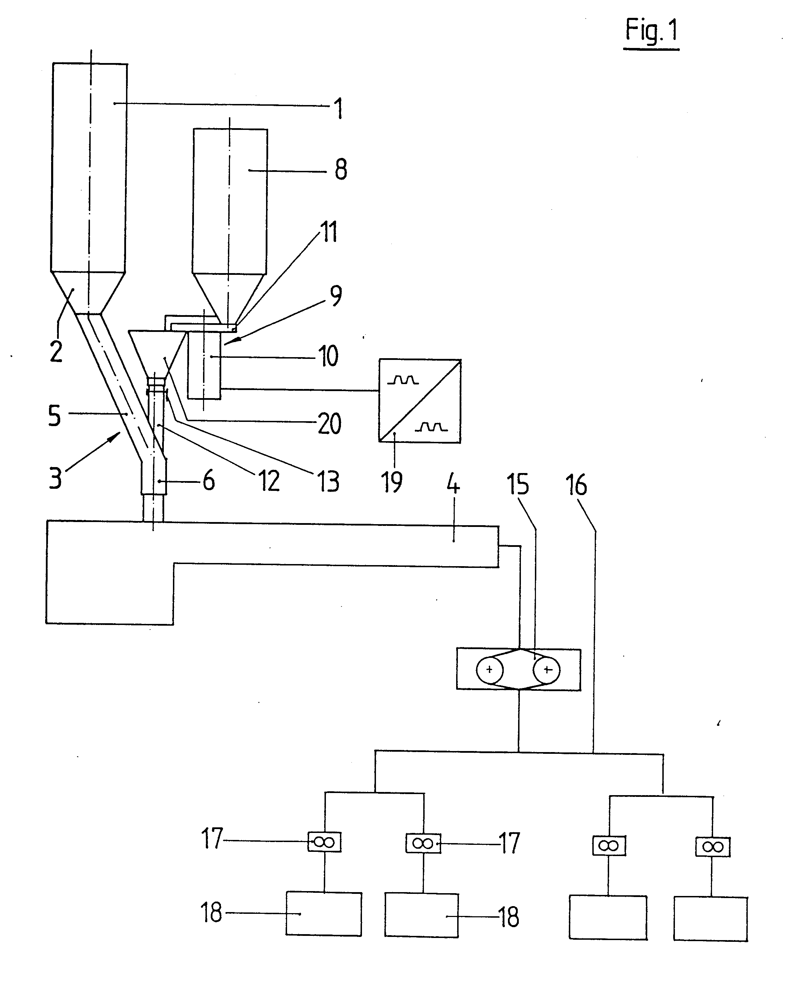

Figur 1 zeigt eine Spinnanlage mit der erfindungsgemäßen Vorrichtung.

Figur 2 zeigt in größerem Maßstab einen Ausschnitt aus Figur 1.

Figur 3 zeigt ein anderes Ausführungsbeispiel der erfindungsgemäßen Vorrichtung in einer Darstellung analog zu Figur 2.

Ein zur Aufnahme von Kunststoffgranulat bestimmtes Vorratssilo 1 ist durch einen von der Auslauföffnung seines trichterförmigen Unterteils 2 ausgehenden Füllschacht 3 mit der Einfüllöffnung eines Schneckenextruders 4 verbunden. Der Füllschacht 3 besteht aus einem schräg angeordneten Oberteil 5 und einem senkrechten, relativ kurzen Unterteil 6 in Form eines zylindrischen Rohres, das teilweise als Schauglas 7 ausgebildet ist.

Neben dem Vorratssilo 1 steht ein kleinerer Behälter 8, der mit Farbstoffgranulat gefüllt ist. Unter der Auslauföffnung des Behälters 8 ist eine handelsübliche Dosierstation 9 angeordnet. Diese besteht im wesentlichen aus einem Synchronmotor 10 und einer von diesem angetriebenen waagerechten Scheibe 11, die am Umfang viele kleine Dosierkammern aufweist. Unter der Abgabeseite der Dosiervorrichtung 9 befindet sich ein Trichter 20, von dem senkrecht nach unten ein Fallschacht 12 ausgeht. Dieser ist als Rohr ausgebildet und an einer Halterung 13 aufgehängt. Das Rohr durchdringt die Oberseite des schräg gestellten Oberteils 5 des Füllschachtes 3 und endet mittig in dem senkrechten Unterteil 6. Der Durchmesser des rohrförmigen Unterteils 6 des Füllschachtes 3 ist etwa doppelt so groß wie der Durchmesser des Einfallschachtes 12, daß heißt, das Querschnittsverhältnis ist ungefähr 4:1. Der Abstand zwischen dem unteren Ende des Einfallschachts 12 und der Oberfläche der Extruderschnecke entspricht -bedingt durch das Schauglas 7 -etwa dem 3-bis 4fachen Durchmesser des Unterteils 6.

Im Betrieb bildet Kunststoffgranulat in dem ganzen Füllschacht 3 eine dichte Schüttung und läuft dem Extruder 4 kontinuierlich in der Menge zu, die der jeweils verarbeiteten Materialmenge entspricht, ohne daß es hierzu einer besonderen Dosierung bedarf. Unter dem unteren Ende des Einfallschachtes 12 bildet die Granulatfüllung eine trichterförmige Böschung 14, die sich durch nachfließendes Kunststoffgranulat fortwährend erneuert. Auf diese Böschung rieselt im freien Fall das Farbstoffgranulat, das in einer weiter unten beschriebenen Weise exakt in einem vorgegebenen Verhältnis -z.B. 5 % -zum Materialdurchsatz dosiert ist. Die Böschung saugt sozusagen den Farbstoff in die Granulatsäule hinein. Dadruch bildet sich im Kern der Granulatsäule unter dem Böschungstrichter 14 eine senkrechte Ader hoher Farbstoffkonzentration. Obwohl der Farbstoff durch die oben beschriebene volumetrisch arbeitende Dosierstation 9 intermittierend in Form von vielen kleinen Portionen zugeführt wird, ist die Ader auf der ganzen Höhe der Säule praktisch gleichmäßig in dem Sinne, daß für jede gedachte dünne Scheibe der Farbstoffgehalt annähernd gleich groß ist. Wichtig ist dabei, daß in dem Böschungstrichter 14 jede Stauung des Farbstoffs vermieden wird, so daß sich keinesfalls ein in den Einfallschacht 12 hineinreichender Pfropfen bildet. Die hierfür notwendige Bedingung, daß das Volumen der einzelnen Farbstoffportionen kleiner ist als das Volumen des Böschungstrichters 14, ist bei den in Betracht kommenden Dimensionen leicht zu erfüllen. Je geringer die Höhe der Säule zwischen Böschungstrichter 14 und Extruderschnecke, desto geringer ist die Gefahr einer Entmischung auf diesem Wegstück.

Im Extruder 4 wird das Granulat in üblicher Weise aufgeschmolzen. Durch die Mischwirkung des Extruders wird eine völlig gleichmäßige Einfärbung der Schmelze erreicht. Die aus dem Extruder austretende Schmelze gelangt über ein Wechselfilter 15 und ein aus mehrfach verzweigten Leitungen bestehendes Verteilersystem 16 zu den Spinnpumpen 17 und von dort zu den Düsenpaketen 18, aus denen die Fäden austreten.

Jede Spinnpumpe 17 ist durch einen nicht dargestellten Synchronmotor angetrieben. Die Stromversorgung erfolgt über einen gemeinsamen, ebenfalls in der Zeichnung nicht dargestellten Umrichter, dessen sekundärseitige Frequenz entsprechend der vorgegebenen Drehzahl der Spinnpumpen eingestellt wird. Das Produkt aus der Frequenz und der Anzahl der jeweils eingeschalteten Spinnpumpen ist proportional zum Materialdurchsatz durch den Extruder 4.

Der Synchronmotor 10 der Dosierstation 9 wird über einen zweiten Umrichter 19 mit Strom versorgt, dessen Frequenz proportional zu dem soeben erwähnten Produkt eingestellt wird. Der Proportionalitätsfaktor bestimmt die zudosierte Farbstoffmenge.

Bei einem Farbwechsel ist der glatte, senkrechte Einfallschacht 12 leicht zu reinigen oder wird einfach ausgetauscht. Der Füllschacht 3, insbesondere auch das Unterteil 6, bedarf keiner besonderen Reinigung, da der Farbstoff mit den Wandungen nicht in Berührung kommt. Zwecks Reinigung des Extruders 4 und der nachgeschalteten Komponenten wird das System für eine kurze Zeitspanne nur mit Kunststoffgranulat beschickt, ohne daß Farbstoff zugeführt wird.

Da die Reinigung einer Dosierstation naturgemäß mehr Zeit in Anspruch nimmt, sind zweckmäßig mehrere Dosierstationen so angeordnet, daß ihre Auslauföffnungen alle gemeinsam in den Trichter münden.

Die Dosierstation 9 gehört nicht zum Gegenstand der Erfindung, und die Erfindung ist in dieser Hinsicht nicht an ein bestimmtes System oder eine bestimmte Bauart gebunden. Abweichend von dem beschriebenen Ausführungsbeispiel, bei dem eine volumetrisch arbeitende Dosierstation beschrieben wurde, kann auch eine handelsübliche gravimetrisch arbeitende Dosierstation eingesetzt werden. Dies empfiehlt sich, wenn die Ansprüche an die Gleichmäßigkeit der Einfärbung außergewöhnlich hoch sind oder wenn sich bei kleinen Dosiermengen bei volumetrischer Dosierung zu große Intervalle ergeben würden.

Die Erfindung ist auch mit Vorteil anwendbar, wenn der Farbstoff nicht als Granulat, sondern als Pulver oder in flüssiger Form vorliegt.

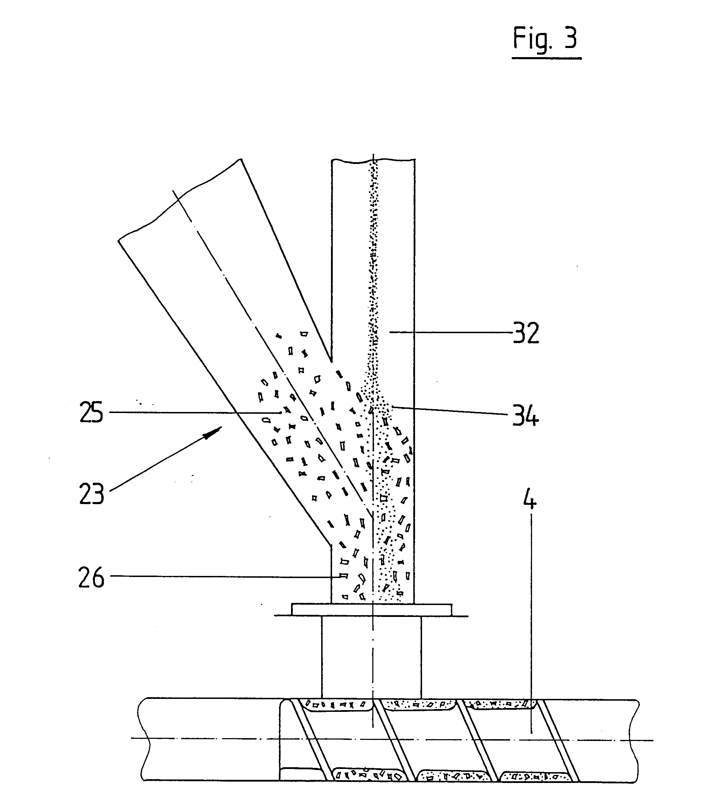

Bei dem in Figur 3 dargestellten abgewandelten Ausführungsbeispiel besteht der Füllschacht 23 aus einem schräg gestellten, von der Auslauföffnung eines nicht dargestellten Silos ausgehenden Oberteil 25 und einem senkrecht auf der Einfüllöffnung des Extruders 4 stehenden kurzen Unterteil 26 mit rechteckigem Querschnitt. Ein Einfallschacht 32 mündet an der Knickstelle der beiden stumpfwinklig aneinander stoßenden Teile des Füllschachts 23 von oben in diesen ein. Die senkrechte Projektion des Einfallschachtquerschnitts deckt sich mit dem Querschnitt des Unterteils 26.

Bei diesem Ausführungsbeispiel bildet das Kunststoffgranulat unter der Einmündung des Einfallschachts 32 eine Böschung 34 in Form einer geneigten Ebene. Auf diese Böschung, die sich durch nachfließendes Granulat kontinuierlich erneuert, rieselt der Farbstoff. Im übrigen ist die Arbeitsweise völlig analog zu dem vorher beschriebenen Ausführungsbeispiel.

## Ansprüche

1. Verfahren zum Zumischen eines feinverteilten Farbstoffs zu einem Kunststoffgranulat, das als nachrutschende Schüttung einem Extruder, insbesondere einem Spinnextruder, zugeführt wird, wobei der Farbstoff dosiert in die Schüttung eingebracht wird, dadurch gekennzeichnet, daß der Farbstoff auf eine Böschung des Kunststoffgranulats rieselt.

2. Verfahren nach Anspruch 1, gekennzeichnet durch eine trichterförmige Böschung.

3. Vorrichtung zum Zuführen eines Kunststoffgranulats zu einem Extruder, insbesondere zu einem Spinnextruder, und zum Zumischen eines feinverteilten Farbstoffs nach dem Verfahren gemäß Anspruch 1 oder 2, mit einem Füllschacht für das Kunststoffgranulat und mit einem in den Füllschacht einmündenden Kanal für die Zugabe des Farbstoffs, dadurch gekennzeichnet, daß der Kanal als senkrechter Einfallschacht (12, 32) ausgebildet ist.

4. Vorrichtung nach Anspruch 3, dadurch gekennzeichnet, daß das Querschnittsverhältnis zwischen Füllschacht (3, 23) und Einfallschacht (12, 32) an der Zusammenführung (6, 12) kleiner ist als 6:1, vorzugsweise zwischen 4:1 und 1:1.

5. Vorrichtung nach Anspruch 3 oder 4, gekennzeichnet durch einen Trichter (20) am oberen Ende des Einfallschachts (12).

6. Vorrichtung nach einem der Ansprüche 3 bis 5, dadurch gekennzeichnet, daß der Einfallschacht (12) ein mittig in dem Füllschacht (3) endendes Rohr ist.

7. Vorrichtung nach Anspruch 6, dadurch gekennzeichnet, daß das den Einfallschacht (12) bildende Rohr leicht austauschbar oder mit einem leicht austauschbaren Einsatz versehen ist.

Fig.1

Fig. 2

<u>Fig. 3</u>